# EUROPÄISCHE PATENTSCHRIFT

(11) **EP 2 172 680 B1**
(45) Veröffentlichungstag und Bekanntmachung des Hinweises auf die Patenterteilung: **15.01.2020**
(21) Anmeldenummer: 09010700.4
(22) Anmeldetag: 20.08.2009
(51) Int. Cl.: F16K 1/14, B05B 1/30, B05B 9/01

(54) **Ventilanordnung**
Valve assembly
Agencement de vanne

(30) Priorität: 03.11.2008 DE 202008014524 U; 02.10.2008 DE 202008013071 U
(43) Veröffentlichungstag der Anmeldung: 07.04.2010
(73) Patentinhaber: Suttner GmbH, 33818 Leopoldshöhe (DE)
(72) Erfinder: Zunkel, Steffen, 33813 Oerlinghausen (DE)
(74) Vertreter: Von Rohr Patentanwälte Partnerschaft mbB

(56) Entgegenhaltungen:
- EP-A1- 1 886 732
- JP-Y1- S48 831
- US-A- 2 840 102
- US-A1- 2005 067 028
- US-A1- 2007 228 190

## Beschreibung

Die vorliegende Erfindung betrifft eine Ventilanordnung insbesondere für eine Hochdruckreinigungsvorrichtung gemäß dem Oberbegriff des Anspruchs 1 sowie eine damit versehene Ventilpistole und Hochdruckreinigungsvorrichtung.

Hochdruckreinigungsvorrichtungen, auch kurz Hochdruckreiniger genannt, werden für Reinigungszwecke eingesetzt. An die Hochdruckreinigungsvorrichtung ist eine Hochdruckleitung, üblicherweise ein Hochdruckschlauch, und eine Ventilpistole mit einer optionalen Lanze und einer Düse zur Ausgabe einer Flüssigkeit, meist Wasser oder sonstige Reinigungsflüssigkeit, unter hohem Druck und ggf. unter hoher Temperatur anschließbar. Zum Absperren der unter hohem Druck stehenden Flüssigkeit ist eine Ventilanordnung meistens in der Ventilpistole vorgesehen. Die Ventilanordnung weist ein Sperrventil auf, das manuell bei Betätigung der Ventilpistole geöffnet werden kann. Bei hohen Drücken erfordert das Öffnen des Sperrventils gegen den Flüssigkeitsdruck eine verhältnismäßig große Kraft.

Die JP S48 831 Y1 offenbart eine Sprühpistole mit einer Ventilanordnung, die einen Ventilsitz mit zugeordneter und durch eine Feder gegen den Ventilsitz vorgespannten Ventilkugel aufweist. Bei Betätigung eines Auslösers wird die Ventilkugel durch einen Stößel entgegen der Federkraft vom Ventilsitz abgehoben und das Ventil somit geöffnet. Die Anordnung ist dazu ausgebildet, zu verhindern, dass eine chemische Lösung, wie Farbe, unmittelbar in großen Mengen abgegeben wird, sobald der Auslöser betätigt wird. Hierzu ist der Stößel an seinem am Ventilsitz anliegenden Ende mit einem vergrößerten Durchmesser ausgebildet, sodass beim anfänglichen Anheben der Ventilkugel zwischen Ventilsitz und Stößel nur wenig Flüssigkeit hindurchgelangt. Ferner ist oberhalb des Ventilsitzes ein ringförmiger Bereich mit konisch zulaufender Innenausnehmung zur Aufnahme der Ventilkugel ausgebildet, wobei der Bereich die Ventilkugel umfangsseitig umgibt.

Die US 2,840,102 A betrifft eine Ventilvorrichtung für einen Wasserhahn. Die Ventilanordnung weist einen Ventilsitz und eine Ventilkugel auf, die nur durch den Wasserdruck gegen den Ventilsitz gedrückt wird und durch Betätigung des Wasserhahns über einen Stößel vom Ventilsitz abgehoben werden kann. Die Ventilkugel ist dabei in einer Führungshülse geführt, die Durchgänge für den Wasserfluss aufweist.

Die US 2005/0067028 A1 offenbart eine Vorrichtung mit einem magnetisch betriebenen Drei-Wege-Ventil zum Umlenken von Betriebsöl für eine hydraulische Presse. Das Ventil weist ein kugelförmiges Ventilelement auf, das mit einer Ventilfeder gegen einen Ventilsitz vorgespannt ist. Eine Ventilstange kann magnetisch betätigt werden, um das Ventilelement gegen die Federkraft vom Ventilsitz abzuheben. Die Vorrichtung weist ferner ein Ventilführungselement mit einer Vielzahl von Rillen auf, die als Durchgang dienen.

Zur Verringerung der Öffnungskraft ist es beispielsweise aus der DE 20 2006 012 417 U1 bekannt, einen Kolben in Öffnungsrichtung auf das Sperrventil, insbesondere einen Ventilkörper des Sperrventils, zur Druckentlastung wirken zu lassen, wobei der Kolben durch den stromauf des Sperrventils anstehenden Flüssigkeitsdruck beaufschlagt wird. Dies erfordert jedoch einen verhältnismäßig komplizierten Aufbau und führt zu unterwünschten Reibungskräften, die einem schnellen und leichten Öffnen und Schließen des Sperrventils zuwider laufen.

Wenn keine Öffnungs- bzw. Druckentlastung durch den auf den Ventilkörper wirkenden Kolben erfolgt, besteht in der Praxis bei höheren Drücken das Problem, dass der Ventilkörper sehr schnell verschleißt, insbesondere wenn er nur durch eine zugeordnete Schließfeder geführt wird. Dies mag durch verschiedene Effekte verursacht werden. Beispielsweise kann der Kolben zur Druckentlastung zu einem langsameren Schließen des Sperrventils führen, wodurch ein unerwünschtes Schlagen des Ventilkörpers auf den Ventilsitz verhindert oder minimiert werden kann. Der in der Praxis auftretende Verschleiß führt dazu, dass derartige Ventilanordnungen ohne Druckentlastung normalerweise nicht für hohe Drücke geeignet sind bzw. eingesetzt werden.

Der vorliegenden Erfindung liegt die Aufgabe zugrunde, eine Ventilanordnung zum Absperren und Freigeben von insbesondere unter hohem Druck stehender Flüssigkeit sowie eine Ventilpistole mit einer derartigen Ventilanordnung und eine Hochdruckreinigungsvorrichtung mit einer derartigen Ventilanordnung anzugeben, die bei einfachem und kostengünstigem Aufbau auch bei hohem Druck einsetzbar sind und/oder den Verschleiß an einem Ventilsitz und/oder Ventilkörper insbesondere auch bei hohem Flüssigkeitsdruck auf einfache und kostengünstige Weise reduzieren.

Die obige Aufgabe wird durch eine Ventilanordnung gemäß Anspruch 1, eine Ventilpistole gemäß Anspruch 11 oder eine Hochdruckreinigungsvorrichtung gemäß Anspruch 13 gelöst. Vorteilhafte Weiterbildungen sind Gegenstand der Unteransprüche.

Die Ventilanordnung bzw. das Sperrventil weist eine sich an den Ventilsitz unmittelbar anschließende Führung auf, um den Ventilkörper zu führen.

Erfindungsgemäß weist die Führung eine oder mehrere Umfangsfläche(n), die sich an den Ventilsitz anschließt bzw. anschließen, auf oder ist daraus gebildet, wobei die Umfangsfläche(n) mit mehreren über den Umfang verteilten Ausnehmungen oder Taschen versehen ist bzw. sind. So kann der Strömungswiderstand insbesondere bei Abheben des Ventilkörpers vom Ventilsitz und/oder bei geöffnetem Sperrventil verringert werden.

Gemäß einem Aspekt ist die Führung ausgebildet, um den Ventilkörper insbesondere nur unmittelbar vor dem Aufsitzen auf dem Ventilsitz und/oder nur für eine Teilstrecke des Ventilhubs vorzugsweise seitlich zu führen und/oder zu zentrieren.

Gemäß einem weiteren Aspekt ist die Führung konisch, konkav, hohlkugelabschnittsartig, ringförmig und/oder verjüngt zum Ventilsitz hin zulaufend ausgebildet.

Erfindungsgemäß ist die Führung einstückig mit dem Ventilsitz ausgebildet.

So kann erreicht werden, dass der Ventilkörper zumindest im Wesentlichen nur in unmittelbarer Nähe des Ventilsitzes geführt wird. So wird bei einfachem Aufbau und Leichtgängigkeit eine ausreichende Führung verwirklicht, die ein unerwünschtes Schlagen des Ventilkörpers oder dergleichen verhindert. Insbesondere haben Versuche gezeigt, dass sich hierdurch der Verschleiß am Ventilsitz und/oder Ventilkörper wesentlich reduzieren lässt.

Die genannten Aspekte können unabhängig voneinander und/oder in einer beliebigen Kombination miteinander sowie auch in beliebigen Kombinationen mit weiteren Aspekten und Merkmalen der vorliegenden Erfindung verwirklicht werden.

Weitere Merkmale, Vorteile und Aspekte der vorliegenden Erfindung ergeben sich aus den Ansprüchen und der nachfolgenden Beschreibung einer bevorzugten Ausführungsform anhand der Zeichnung. Es zeigt:
- Fig. 2: einen schematischen, ausschnittweisen Schnitt der Ventilanordnung;
- Fig. 3: eine ausschnittweise Vergrößerung von Figur 2;
- Fig. 4: eine Seitenansicht eines Ventilsitzes der Ventilanordnung;
- Fig. 5: eine Stirnansicht des Ventilsitzes, und
- Fig. 6: eine perspektivische Ansicht des Ventilsitzes.

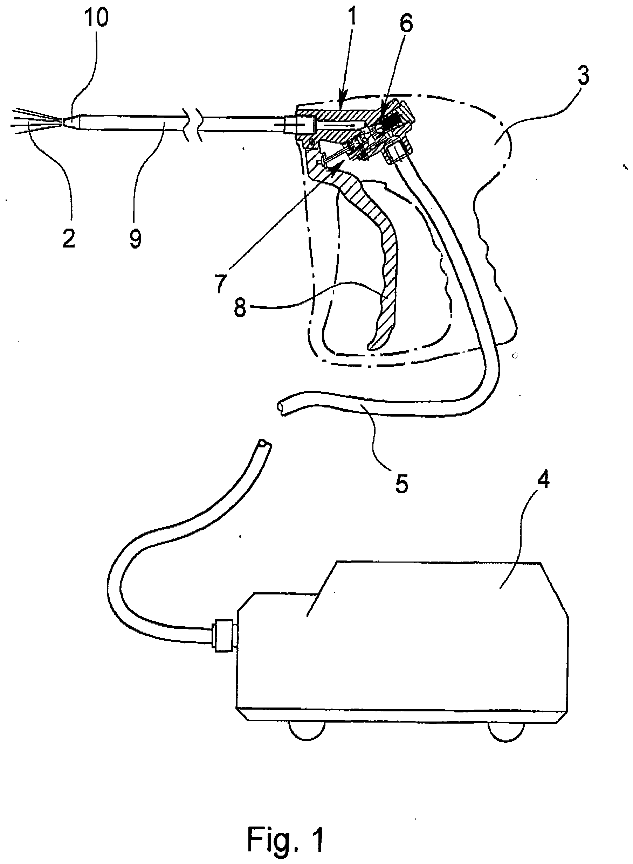

Figur 1 zeigt in einer sehr schematischen Darstellung eine vorschlagsgemäße Ventilanordnung 1 zum Absperren und Freigeben von unter hohem Druck stehender Flüssigkeit 2. Beim Darstellungsbeispiel ist die Ventilanordnung 1 in eine Ventilpistole 3 eingebaut, die an eine Hochdruckreinigungsvorrichtung 4 im eingangs genannten Sinne angeschlossen ist. Vorzugsweise ist die Ventilpistole 3 über einen Schlauch 5 an die Hochdrucksreinigungsvorrichtung 4 angeschlossen. Der Schlauch 5 bildet dann eine Hochdruckleitung, der die Ventilanordnung 1 zum wahlweisen Absperren und Freigeben zugeordnet ist.

Die Flüssigkeit 2, beispielsweise Wasser oder eine sonstige Reinigungsflüssigkeit, steht insbesondere unter hohem Druck. Unter hohem Druck ist bei der vorliegenden Erfindung vorzugsweise ein Druck von mindestens 10 oder 20 MPa, insbesondere mindestens 30 MPa und mehr, gegebenenfalls sogar 50 MPa und mehr, zu verstehen.

Die Ventilanordnung 1 weist ein Sperrventil 6 auf, das mittels einer Öffnungseinrichtung 7, die ihrerseits einen Handhebel 8 aufweist, geöffnet werden kann.

Auslassseitig sind an die Ventilpistole 3 eine optionale Sprühlanze 9 und eine Düse 10 zur Ausgabe der Flüssigkeit 2, wie in Figur 1 angedeutet, angeschlossen.

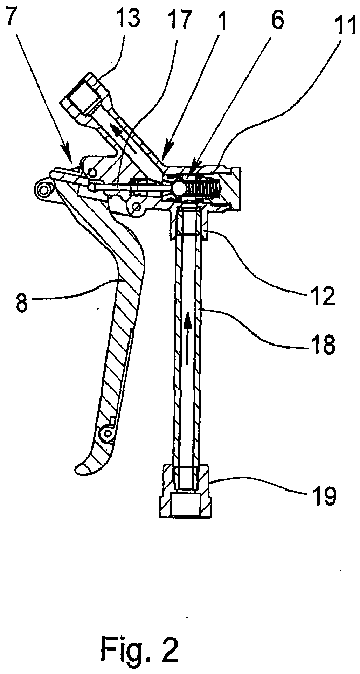

Figur 2 zeigt in einem ausschnittsweisen, vergrößerten Schnitt einen bevorzugten Aufbau der vorschlagsgemäßen Ventilanordnung 1.

Die Ventilanordnung 1 weist ein vorzugsweise aus Messing oder dergleichen bestehendes Gehäuse 11 auf, in dem das Sperrventil 6 aufgenommen ist. Das Gehäuse 11 weist einen Einlass bzw. Einlassanschluss 12 zur Zuführung der Flüssigkeit 2 und einen Auslass bzw. Auslassanschluss 13 zur Ableitung der Flüssigkeit 2 auf. Zwischen dem Einlass 12 und dem Auslass 13 ist das Sperrventil 6 angeordnet.

Das Sperrventil 6 weist einen vorzugsweise als Kugel ausgebildeten Ventilkörper 14 auf, dem ein in das Gehäuse 11 eingebauter Ventilsitz 15 zugeordnet ist. Der Ventilkörper 14 ist bezüglich der durch Pfeile angeordneten Durchströmrichtung der Flüssigkeit 2 stromauf des Ventilsitzes 15 bzw. vor dem Ventilsitz 15 angeordnet.

Das Sperrventil 6 weist vorzugsgemäß eine Feder 16 oder sonstige Schließ- bzw. Rückstelleinrichtung auf, die den Ventilkörper 14 in seine Schließstellung gegen den Ventilsitz 15 vorspannt. Vorzugsweise ist die Vorspannkraft einstellbar, hier durch ein einstellbares Widerlager für die Feder 16.

Bei der Darstellung gemäß Figur 2 ist eine optionale Rohrverlängerung 18 mit einem Anschlussstück 19 für die Hochdruckleitung bzw. für den Schlauch 5 an den Einlass 12 angeschlossen, vorzugsweise angeschraubt.

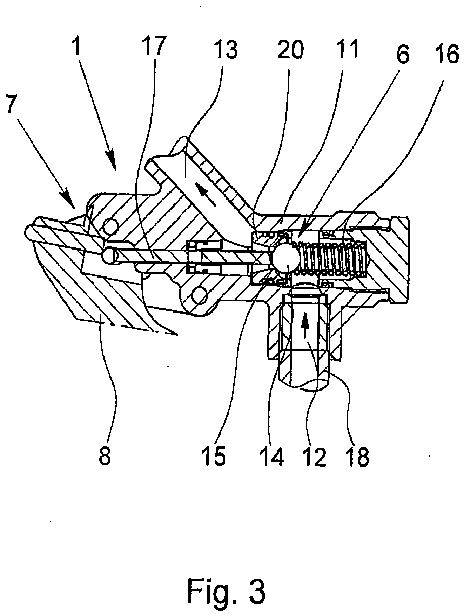

Der Figur 3, die eine ausschnittsweise Vergrößerung von Figur 2 darstellt, sind weitere Einzelheiten der dargestellten und bevorzugten Ausführungsform zu entnehmen.

Die Feder 16 ist vorzugsweise stromauf des Ventilsitzes 15 bzw. 16 des Ventilkörpers 14 angeordnet.

Die Feder 16 wirkt vorzugsweise unmittelbar auf den Ventilkörper 14.

Die Feder 16 ist vorzugsweise als Schraubenfeder ausgebildet, die sich in Verlängerung der Hauptbewegungsrichtung des Ventilkörpers 14 erstreckt.

Der Flüssigkeitsdruck bewirkt vorzugsweise auch ein Schließen des Sperrventils 6. Insbesondere presst der Flüssigkeitsdruck den Ventilkörper 14 in der Schließstellung gegen den Ventilsitz 15. Dementsprechend muss ein verhältnismäßig große Öffnungskraft durch die Öffnungseinrichtung 7 zum Öffnen des Sperrventils 6 aufgebracht werden.

Zur Verringerung der Öffnungskraft ist der effektive Querschnitt des Ventilsitzes 15 vorzugsweise möglichst klein. Ein dementsprechend relativ kleiner Ventilkörper 14 neigt jedoch noch stärker zum Schlagen oder Schwingen, insbesondere beim Schließen des Sperrventils 6.

Die Öffnungseinrichtung 7 weist ein Stellelement 17 auf, das vorzugsweise als Bestätigungsstange ausgebildet und vorzugsweise aus dem Gehäuse 11 abgedichtet herausgeführt ist.

Bei Betätigung des Handhebels 8 ist das Sperrventil 6 über die Öffnungseinrichtung 7 bzw. dessen Stellelement 17 öffenbar. Insbesondere ist das Stellelement 17 hierzu derartig verschiebbar, dass es den Ventilkörper 14 vom zugeordneten Ventilsitz 15 abhebt und dadurch das Sperrventil 6 öffnet, also eine fluidische Verbindung für die Flüssigkeit 2 vom Einlass 12 zum Auslass 13 hin freigibt.

Beim Darstellungsbeispiel ist der Handhebel 8 vorzugsweise am Gehäuse 11 der Ventileinrichtung 1 drehbar bzw. schwenkbar gelagert. Jedoch sind auch andere konstruktive Lösungen möglich.

Der Handhebel 8 greift vorzugsweise unmittelbar an dem Stellelement 17 an, insbesondere an dem aus dem Gehäuse 11 vorragenden Teil bzw. freien Ende des Stellelements 17. Jedoch kann grundsätzlich auch eine aus dem Stand der Technik bereits bekannte oder sonstige Untersetzung (zusätzlich) eingesetzt werden, um eine weitere Verringerung der Öffnungskraft durch Vergrößerung des Betätigungsweges des Handhebels 8 zumindest beim anfänglichen Öffnen (also entsprechend großer Untersetzung) zu erreichen.

Die Öffnungseinrichtung 7 bzw. das Stellelement 17 greift vorzugsweise abströmseitig bzw. auslassseitig bzw. durch den Ventilsitz 15 hindurch am Ventilkörper 14 an.

Das Stellelement 17 ist vorzugsweise stab- und/oder stangenförmig ausgebildet.

Bei Betätigung des Handhebels 8 (Schwenken gegen Uhrzeigerrichtung bei der Darstellung gemäß Figur 1 und 2) wird das Stellelement 17 axial verschoben und gegen den Ventilkörper 14 gedrückt, so dass der Ventilkörper 14 vom Ventilsitz 15 gegen die Kraft der Feder 16 abgehoben wird und dadurch das Sperrventil 6 öffnet. Bei Loslassen des Handhebels 8 bewirkt die Feder 16 wieder ein Schließen des Sperrventils 6, also ein Zurückbewegen des Ventilkörpers 14 gegen den Ventilsitz 15 und eine axiale Rückstellung des Stellelements 17.

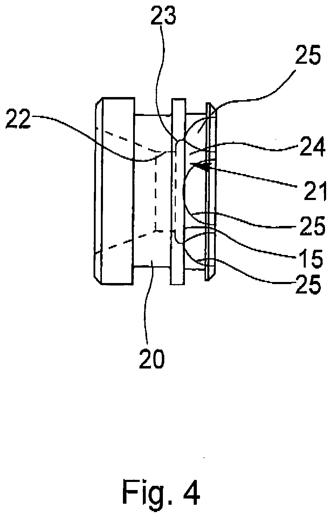

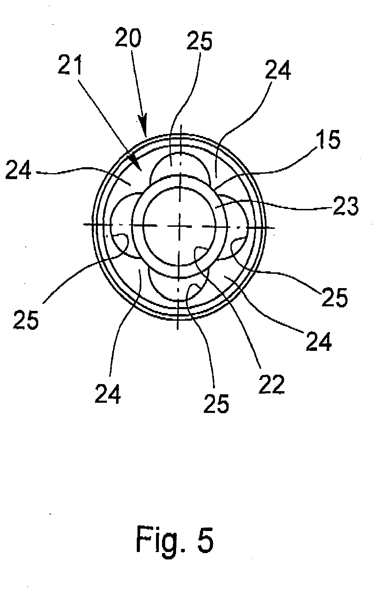

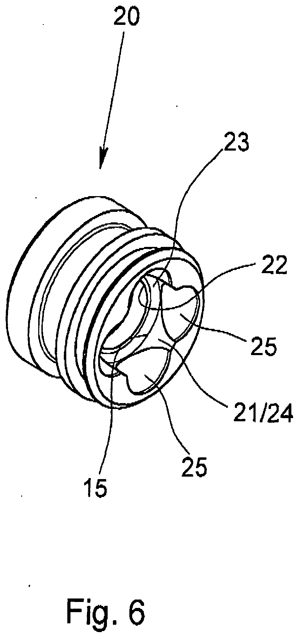

Figuren 4 bis 6 zeigen in vergrößerter Darstellung ein Bauteil 20, das beim Darstellungsbeispiel den Ventilsitz 15 bildet. Figur 4 zeigt eine Seitenansicht des Bauteils 20. Figur 5 zeigt eine Stirnansicht des Bauteils 20. Figur 6 zeigt eine perspektivische Ansicht des Bauteils 20.

Das Bauteil 20 ist vorzugsweise in das Gehäuse 11 eingesetzt, wie insbesondere in Figur 3 schematisch dargestellt. Jedoch ist es grundsätzlich auch möglich, den Ventilsitz 15 nicht durch ein separates Bauteil 20, sondern beispielsweise durch ein Gehäuseteil oder ein sonstiges Bauelement der Ventilanordnung 1 bzw. des Sperrventils 6 zu bilden. Auch in diesem Fall gelten die nachfolgenden Ausführungen entsprechend.

Die Ventilanordnung 1 bzw. das Sperrventil 6 weist eine sich an den Ventilsitz 15 unmittelbar anschließende Führung 21 auf, die in Figuren 4 bis 6 angedeutet ist.

Die Führung 21 ist einstückig mit dem Ventilsitz 15 - hier dem Bauteil 20 - ausgebildet. So ergibt sich eine einfache Montage.

Die Führung 21 ist vorzugsweise konisch, konkav, hohlkugelabschnittsartig, ringförmig, zylindrisch und/oder verjüngt zum Ventilsitz 15 hin ausgebildet. Im Querschnitt kann die Führung 21 in Axialrichtung konstant und bedarfsweise im Wesentlichen an die Form des Ventilkörpers 14 angepasst sein, besonders bevorzugt derart, dass ausgehend vom Ventilsitz 15 bei darauf aufsitzendem Ventilkörper 14 ein zumindest kleiner - vorzugsweise mit zunehmendem Abstand vom Ventilsitz 15 zunehmender - Spalt zwischen dem Ventilkörper 14 und der Führung 21 besteht, um eine sicher dichtende Anlage des Ventilkörpers 14 am Ventilsitz 15 bei geschlossenem Sperrventil 6 zu gewährleisten.

Beim Darstellungsbeispiel weist das Sperrventil 6 bzw. Bauteil 20 einen Durchlass 22 auf, an dem sich ein ventilsitzseitig bzw. stromauf eine radiale Verbreitung 23 anschließt, deren einlassseitige bzw. dem Durchlass 22 abgewandte Kante, die bedarfsweise etwas gefasst sein kann, den Ventilsitz 15 bildet. Dies erleichtert eine hochgenaue Bearbeitung bzw. Herstellung. Jedoch kann der Ventilsitz 15 beispielsweise auch direkt von einer Kante des Durchlasses 22 oder dergleichen gebildet sein.

Beim Darstellungsbeispiel ist der Ventilsitz 15 vorzugsweise also zumindest im Wesentlichen ringförmig, kantenartig bzw. linienförmig ausgebildet. Jedoch sind auch andere Formen möglich.

Die Führung 21 schließt sich mit einer oder mehreren Umfangsfläche(n) 24 vorzugsweise unmittelbar bzw. direkt an dem Ventilsitz 15 einlassseitig bzw. auf der Seite des Ventilkörpers 14 an den Ventilsitz 15 an.

Die Führung 21 bzw. Umfangsfläche(n) 24 ist bzw. sind vorzugsweise zumindest im Wesentlichen an den bei geschlossenem Sperrventil 6 benachbarten Oberflächenbereich des Ventilkörpers 14 angepasst bzw. zumindest im Wesentlichen komplementär dazu ausgebildet. Bei der beim Darstellungsbeispiel bevorzugten Kugelform des Ventilkörpers 14 ist bzw. sind die Führung 21 bzw. deren Führungs- oder Umfangsflächen(n) 24, also zumindest im Wesentlichen entsprechend einem Ringbereich einer Hohlkugel bzw. konkav und/oder im Wesentlichen parabolisch ausgebildet.

Die Führung 21 bzw. deren Führungs- oder Umfangsfläche(n) 24 bewirkt bzw. bewirken vorzugsweise, dass der Ventilkörper 14 insbesondere nur unmittelbar vor dem Aufsitzen auf dem Ventilsitz 15 vorzugsweise seitlich geführt und/oder bezüglich des Ventilsitzes 15 zentriert wird.

Beim Annähern des Ventilkörpers 14 an den Ventilsitz 15 bzw. beim Schließen des Sperrventils 6 wird der Ventilkörper 14 vorzugsweise durch Flüssigkeit 2 zwischen dem Ventilkörper 14 und der Führung 21 bzw. deren Führungs- oder Umfangsfläche(n) 24 geführt, also ein unmittelbarer Reibkontakt vermieden. Dies führt zu einem leichten Öffnen und Schleißen des Sperrventils 6 und/oder Minimierung des Verschleißes.

Ein weiterer Aspekt bzw. Vorteil der vorschlagsgemäßen Führung 21 liegt darin, dass diese den Aufprall des Ventilkörpers 14 auf den Ventilsitz 15 beim Schließen des Sperrventils 6 reduziert, indem der Ventilkörper 14 abgebremst wird. Das Abbremsen erfolgt dadurch, dass die zwischen dem Ventilkörper 14 und der Führung 21 befindliche Flüssigkeit 2 aufgrund des sich beim Schließen verkleinernden Spalts zwischen dem Ventilkörper 14 und der Führung 21 zunehmenden schwieriger entweichen oder verdrängt werden kann.

Um das Schließverhalten und/oder das Öffnungsverhalten des Sperrventils 6 zu optimieren, insbesondere um auch beim anfänglichem Abheben des Ventilkörpers 14 vom Ventilsitz 15 sehr schnell einen großen Strömungsquerschnitt für die Flüssigkeit 2 bereitzustellen bzw. sehr schnell die erforderliche Öffnungskraft zu verringern, ist bzw. sind die Umfangsfläche(n) 24 mit mehreren über den Umfang verteilten Ausnehmungen bzw. Taschen 25, versehen. So kann der Strömungswiderstand insbesondere bei Abheben des Ventilkörpers 14 vom Ventilsitz 15 und/oder bei geöffnetem Sperrventil 6 verringert werden.

Aufgrund der Taschen 25 kann die Führung 21 insbesondere zumindest im Wesentlichen nur durch rippen- oder stegartige Abschnitte - vorzugsweise der Umfangsfläche 24 - gebildet sein, die sich hier vorzugsweise axial bzw. in Hubrichtung des Ventilkörpers 14 erstrecken.

Die Ausnehmungen bzw. Taschen 25 sind durch seitliche Einfräsungen, Einbuchtungen oder dergleichen gebildet.

Vorzugsweise erstrecken sich die Ausnehmungen bzw. Taschen 25 in axialer Richtung bzw. in Strömrichtung, zumindest im Wesentlichen bis zum Ventilsitz 15.

Vorzugsweise verringert sich der Querschnitt der Ausnehmungen bzw. Taschen 25 zum Ventilsitz 15 hin.

Der Ventilsitz 15 bzw. die Führung 21 bzw. das Bauelement 20 ist bzw. sind vorzugsweise aus Metall, insbesondere einem Hartmetall, oder aus Keramik hergestellt. Jedoch kann auch ein relativ weiches Material hierfür verwendet werden, insbesondere wenn für den Ventilkörper 14 ein sehr hartes Material verwendet wird.

Der Ventilkörper 14 ist vorzugsweise aus Hartmetall oder Keramik hergestellt.

Die Führung 21 ist vorzugsweise derart ausgeführt, dass der Ventilkörper 14 nur 1 mm oder weniger vor dem Aufsitzen auf den Ventilsitz 15 seitlich geführt und/oder zentriert wird.

Vorzugsweise beträgt die axiale Erstreckung der Führung 21 bzw. der Umfangsfläche(n) 24 höchstens 2 mm, besonders bevorzugt weniger als 1 mm, insbesondere nur einige Zehntel Millimeter.

Bei der vorschlagsgemäßen Ventilanordnung 1 wird der Ventilkörper 14 vorzugsweise von der Feder 16 über den gesamten Ventilhub (relativ zu dem Ventilsitz 15) zentriert bzw. geführt.

Die vorschlagsgemäße Ventilanordnung 1 weist vorzugsweise keine Druckentlastung, wie einen druckentlastenden Kolben und dergleichen, auf, die den Ventilkörper 14 zusätzlich führt und/oder beim Schließen abbremst. Vielmehr werden die damit verbundenen Nachteile, wie hohe Reibungskräfte, statische Überbestimmung nicht bei mehrfacher Lagerung des Kolbens und dergleichen vermieden. Die vorschlagsgemäße Integration der Führung 21 in den Ventilsitz 15 bzw. das Bauteil 20 gestattet eine sehr einfache und kostengünstige Herstellung und/oder Montage.

Weiter kann so sicher gestellt werden, dass die Führung 21 immer exakt zum Ventilsitz 15 passt bzw. ausgerichtet ist.

Vorzugsweise wird der Ventilkörper 14 erst wenige Zehntel Millimeter vor dem Ventilsitz 15 geführt. Insbesondere wird der Ventilkörper 14 insbesondere nicht über den gesamten Ventilhub von der Führung 21 gebremst und/oder geführt. Bei herkömmlichen Konstruktionen kann dies nämlich zu einem Klemmen des Ventilkörpers führen.

## Patentansprüche

1. Ventilanordnung (1) zum Absperren und Freigeben von unter hohem Druck stehender Flüssigkeit (2) für eine Hochdruckleitung, Ventilpistole (3) oder Hochdruckreinigungsvorrichtung (4),
mit einem Sperrventil (6), das einen Ventilkörper (14) und einen zugeordneten Ventilsitz (15) aufweist,
wobei die Ventilanordnung (1) oder das Sperrventil (6) eine sich an den Ventilsitz (15) unmittelbar anschließende Führung (21) aufweist,
**dadurch gekennzeichnet,**
**dass** die Führung (21) einstückig mit dem Ventilsitz (15) ausgebildet ist und eine Umfangsfläche (24), die sich an den Ventilsitz (15) anschließt, aufweist oder daraus gebildet ist, und
**dass** die Umfangsfläche (24) mit mehreren über den Umfang verteilten, seitlichen Ausnehmungen oder Taschen (25) versehen ist, die durch seitliche Einbuchtungen gebildet sind und sich zum Ventilsitz (15) hin verjüngen.

2. Ventilanordnung nach Anspruch 1, **dadurch gekennzeichnet, dass** die Führung (21) den Ventilkörper (14) höchstens 1 mm oder weniger vor dem Aufsitzen auf dem Ventilsitz (15) führt und/oder zentriert.

3. Ventilanordnung nach Anspruch 1 oder 2, **dadurch gekennzeichnet, dass** die Führung (21) konisch, konkav, hohlkugelabschnittsartig, ringförmig, zylindrisch, rippenartig, stegartig oder verjüngt zum Ventilsitz (15) hin ausgebildet ist.

4. Ventilanordnung nach einem der voranstehenden Ansprüche, **dadurch gekennzeichnet, dass** die Ausnehmungen bzw. Taschen (25) ausgebildet sind, um den Strömungswiderstand zu verringern, und/oder dass sich die Ausnehmungen bzw. Taschen (25) im Wesentlichen bis zum Ventilsitz (15) erstrecken.

5. Ventilanordnung nach einem der voranstehenden Ansprüche, **dadurch gekennzeichnet, dass** die Umfangsfläche (24) zumindest im Wesentlichen komplementär zu dem bei geschlossenem Sperrventil (6) benachbarten Oberflächenbereich des Ventilkörpers (14) ausgebildet ist.

6. Ventilanordnung nach einem der voranstehenden Ansprüche, **dadurch gekennzeichnet, dass** der Ventilsitz (15) oder ein den Ventilsitz (15) bildendes Bauteil (20) aus Metall oder Keramik hergestellt ist, und/oder dass der Ventilkörper (14) aus Hartmetall oder Keramik hergestellt ist, und/oder dass der Ventilkörper (14) als Kugel ausgebildet ist.

7. Ventilanordnung nach einem der voranstehenden Ansprüche, **dadurch gekennzeichnet, dass** die Führung (21) ein Mittel zur Verlangsamung bzw. Dämpfung des Schließens des Sperrventils (6) bildet.

8. Ventilanordnung nach einem der voranstehenden Ansprüche, **dadurch gekennzeichnet, dass** das Sperrventil (6) eine den Ventilkörper (14) in die Schließstellung vorspannende Feder (16) aufweist.

9. Ventilanordnung nach einem der voranstehenden Ansprüche, **dadurch gekennzeichnet, dass** die Öffnungseinrichtung (7) einen Handhebel (8) zum manuellen Öffnen des Sperrventils (6) aufweist, oder dass die Öffnungseinrichtung (7) mittels eines Stellelements (17) direkt auf den Ventilkörper (14) wirkt.

10. Ventilanordnung nach einem der voranstehenden Ansprüche, **dadurch gekennzeichnet, dass** die Ventilanordnung (1) oder das Sperrventil (6) für einen Flüssigkeitsdruck von über 30 MPa, ausgelegt ist, und/oder dass der Ventilkörper (14) nicht druckkompensiert ist, also gegen die Kraft des anstehenden Flüssigkeitsdrucks geöffnet werden muss.

11. Ventilpistole (3) für eine Hochdruckreinigungsvorrichtung (4), **gekennzeichnet durch** eine Ventilanordnung (1) gemäß einem der voranstehenden Ansprüche.

12. Ventilpistole (3) nach Anspruch 11, **dadurch gekennzeichnet, dass** die Ventilpistole (3) für einen Flüssigkeitsdruck von über 30 MPa ausgelegt ist.

13. Hochdruckreinigungsvorrichtung (4) mit einer Hochdruckleitung, **gekennzeichnet durch** eine der Hochdruckleitung zugeordnete Ventilanordnung (1) gemäß einem der Ansprüche 1 bis 10.

14. Hochdruckreinigungsvorrichtung (4) nach Anspruch 13, **dadurch gekennzeichnet, dass** die Ventilanordnung (1) in einer Ventilpistole (3) der Hochdruckreinigungsvorrichtung (4) angeordnet ist.

15. Hochdruckreinigungsvorrichtung (4) nach Anspruch 13 oder 14, **dadurch gekennzeichnet, dass** die Hochdruckreinigungsvorrichtung (4) derart ausgebildet ist, dass die Flüssigkeit (2) unter einem Druck von über 30 MPa setzbar ist.

## Claims

1. Valve arrangement (1) for shutting off and releasing high-pressure liquid (2) for a high-pressure line, valve pistol (3) or high-pressure cleaning apparatus (4),
with a check valve (6) which has a valve body (14) and an associated valve seat (15),
the valve arrangement (1) or the check valve (6) having a guide (21) directly adjoining the valve seat (15),
**characterised**
**in that** the guide (21) is formed integrally with the valve seat (15) and has a circumferential surface (24) which adjoins the valve seat (15) or is formed therefrom, and in that the circumferential surface (24) is provided with a plurality of lateral recesses or pockets (25) which are distributed over the circumference, are formed by lateral indentations and taper towards the valve seat (15).

2. Valve arrangement according to claim 1, **characterised in that** the guide (21) guides and/or centres the valve body (14) at most 1 mm or less before it is seated on the valve seat (15).

3. Valve arrangement according to claim 1 or 2, **characterised in that** the guide (21) is conical, concave, hollow sphere segment like, annular, cylindrical, rib-like, web-like or tapered towards the valve seat (15).

4. Valve arrangement according to one of the preceding claims, **characterised in that** the recesses or pockets (25) are formed to reduce the flow resistance and/or **in that** the recesses or pockets (25) extend substantially up to the valve seat (15).

5. Valve arrangement according to one of the preceding claims, **characterised in that** the circumferential surface (24) is formed at least substantially complementary to the surface region of the valve body (14) which is adjacent when the check valve (6) is closed.

6. Valve arrangement according to one of the preceding claims, **characterised in that** the valve seat (15) or a component (20) forming the valve seat (15) is made of metal or ceramic, and/or **in that** the valve body (14) is made of hard metal or ceramic, and/or **in that** the valve body (14) is formed as a ball.

7. Valve arrangement according to one of the preceding claims, **characterised in that** the guide (21) forms a means for slowing down and/or damping the closing of the check valve (6).

8. Valve arrangement according to one of the preceding claims, **characterised in that** the check valve (6) has a spring (16) which biases the valve body (14) into the closed position.

9. Valve arrangement according to one of the preceding claims, **characterised in that** the opening device (7) has a hand lever (8) for the manual opening of the check valve (6), or **in that** the opening device (7) acts directly on the valve body (14) by means of an adjusting element (17).

10. Valve arrangement according to one of the preceding claims, **characterised in that** the valve arrangement (1) or the check valve (6) is designed for a liquid pressure of more than 30 MPa, and/or **in that** the valve body (14) is not pressure-compensated, thus must be opened against the force of the existing liquid pressure.

11. Valve pistol (3) for a high-pressure cleaning apparatus (4), **characterised by** a valve arrangement (1) according to one of the preceding claims.

12. Valve pistol (3) according to claim 11, **characterised in that** the valve pistol (3) is designed for a liquid pressure of more than 30 MPa.

13. High-pressure cleaning apparatus (4) having a high-pressure line, **characterised by** a valve arrangement (1) according to one of claims 1 to 10, the valve arrangement (1) being assigned to the high-pressure line.

14. High-pressure cleaning apparatus (4) according to claim 13, **characterised in that** the valve arrangement (1) is arranged in a valve pistol (3) of the high-pressure cleaning apparatus (4).

15. High-pressure cleaning apparatus (4) according to claim 13 or 14, **characterised in that** the high-pressure cleaning apparatus (4) is designed in such a way that the liquid (2) can be put under a pressure of more than 30 MPa.

## Revendications

1. Agencement de soupape (1) pour l'arrêt et le dégagement d'un liquide haute pression (2) pour une conduite haute pression, un pistolet de soupape (3) ou un dispositif de nettoyage à haute pression (4),
avec une soupape d'arrêt (6) qui présente un corps de soupape (14) et un siège de soupape (15) associé,
l'agencement de soupape (1) ou la soupape d'arrêt (6) ayant un guidage (21) directement adjacent au siège de soupape (15),
**caractérisé**
**en ce que** le guidage (21) est formé d'un seul tenant avec le siège de soupape (15) et présente une surface circonférentielle (24), qui est adjacente au siège de soupape (15), ou est formé à partir de celui-ci, et
**en ce que** la surface circonférentielle (24) est pourvue d'une pluralité d'évidements ou de poches (25) latéraux, qui sont répartis sur la circonférence, qui sont formés par des creux latéraux et s'effilent vers le siège de soupape (15).

2. Agencement de soupape selon la revendication 1, **caractérisé en ce que** le guidage (21) guide et/ou centre le corps de soupape (14) au maximum 1 mm ou moins avant qu'il ne soit posé sur le siège de soupape (15).

3. Agencement de soupape selon la revendication 1 ou 2, **caractérisé en ce que** le guidage (21) est conique, concave, à section sphérique creuse, annulaire, cylindrique, en forme de nervure, en forme de bande ou se rétrécit vers le siège de soupape (15).

4. Agencement de soupape selon l'une des revendications précédentes, **caractérisé en ce que** les évidements ou poches (25) sont formés afin de réduire la résistance à l'écoulement et/ou **en ce que** les évidements ou poches (25) s'étendent sensiblement jusqu'au siège de soupape (15).

5. Agencement de soupape selon l'une des revendications précédentes, **caractérisé en ce que** la surface circonférentielle (24) est au moins sensiblement complémentaire de la zone de surface du corps de soupape (14) adjacente lorsque la soupape d'arrêt (6) est fermée.

6. Agencement de soupape selon l'une des revendications précédentes, **caractérisé en ce que** le siège de soupape (15) ou un composant (20) formant le siège de soupape (15) est en métal ou en céramique, et/ou **en ce que** le corps de soupape (14) est en métal dur ou en céramique, et/ou **en ce que** le corps de soupape (14) est réalisé sous forme de bille.

7. Agencement de soupape selon l'une des revendications précédentes, **caractérisé en ce que** le guidage (21) forme un moyen pour ralentir et/ou amortir la fermeture de la soupape d'arrêt (6).

8. Agencement de soupape selon l'une des revendications précédentes, **caractérisé en ce que** la soupape d'arrêt (6) présente un ressort (16) qui pousse le corps de soupape (14) en position fermée.

9. Agencement de soupape selon l'une des revendications précédentes, **caractérisé en ce que** le dispositif d'ouverture (7) comporte un levier manuel (8) pour l'ouverture manuelle de la soupape d'arrêt (6), ou **en ce que** le dispositif d'ouverture (7) agit directement sur le corps de soupape (14) au moyen d'un élément de réglage (17).

10. Agencement de soupape selon l'une des revendications précédentes, **caractérisé en ce que** le agencement de soupape (1) ou la soupape d'arrêt (6) est conçu pour une pression de liquide supérieure à 30 MPa, et/ou **en ce que** le corps de soupape (14) n'est pas compensé en pression, c'est-à-dire doit être ouvert contre la force de la pression du liquide existant.

11. Pistolet de soupape (3) pour un dispositif de nettoyage à haute pression (4), **caractérisé par** un agencement de soupape (1) selon l'une des revendications précédentes.

12. Pistolet de soupape (3) selon la revendication 11, **caractérisé en ce que** le pistolet de soupape (3) est conçu pour une pression de liquide supérieure à 30 MPa.

13. Dispositif de nettoyage à haute pression (4) comportant une conduite à haute pression, **caractérisé par** un agencement de soupape (1) selon l'une des revendications 1 à 10 affecté à la conduite à haute pression.

14. Dispositif de nettoyage à haute pression (4) selon la revendication 13, **caractérisé en ce que** le agencement de soupape (1) est disposé dans un pistolet de soupape (3) du dispositif de nettoyage à haute pression (4).

15. Dispositif de nettoyage à haute pression (4) selon la revendication 13 ou 14, **caractérisé en ce que** le dispositif de nettoyage à haute pression (4) est conçu de telle sorte que le liquide (2) peut être réglé sous une pression supérieure à 30 MPa.
